(19) Europäisches Patentamt / European Patent Office / Office européen des brevets

(11) **EP 2 670 644 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **11808176.9**

(22) Anmeldetag: **07.12.2011**

(51) Int Cl.:
*B60W 50/02* (2012.01)    *B60W 20/00* (2016.01)
*B60W 10/06* (2006.01)    *B60W 10/08* (2006.01)
*B60K 6/48* (2007.10)    *B60W 50/00* (2006.01)

(86) Internationale Anmeldenummer:
**PCT/EP2011/072042**

(87) Internationale Veröffentlichungsnummer:
**WO 2012/103971 (09.08.2012 Gazette 2012/32)**

(54) **VERFAHREN UND VORRICHTUNG ZUR ÜBERWACHUNG DER BESTIMMUNGSGEMÄßEN FUNKTION MINDESTENS EINER ERSTEN UND EINER ZWEITEN KOMPONENTE EINES FAHRZEUGANTRIEBSSTRANGS**

METHOD AND DEVICE FOR MONITORING THE PROPER FUNCTIONING OF AT LEAST ONE FIRST AND A SECOND COMPONENT OF A VEHICLE DRIVE TRAIN

PROCÉDÉ ET DISPOSITIF POUR SURVEILLER LE BON FONCTIONNEMENT D'AU MOINS UN PREMIER ET UN SECOND COMPOSANT DE LA CHAÎNE CINÉMATIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2011 DE 102011003581**

(43) Veröffentlichungstag der Anmeldung:
**11.12.2013 Patentblatt 2013/50**

(73) Patentinhaber: **Robert Bosch GmbH 70442 Stuttgart (DE)**

(72) Erfinder: **FALKENSTEIN, Jens-Werner 73434 Aalen (DE)**

(56) Entgegenhaltungen:
DE-A1-102005 055 001    DE-A1-102005 062 870
DE-A1-102007 043 607    DE-A1-102008 000 869
DE-A1-102008 064 536

EP 2 670 644 B1

**Beschreibung**

Stand der Technik

Die Ansteuerung eines Verbrennungsmotors mit einem Störsignal und die Auswertung der Reaktion des Verbrennungsmotors mit dem Zweck, den Betriebszustand des Verbrennungsmotors zu erfassen, ist aus der deutschen Patentanmeldung mit dem Aktenzeichen 102008041108.6 bekannt.

Die DE 10 2008 064536 A1 offenbart ein Messverfahren zum Erfassen der Wirkung von mindestens einer Hybridfahrzeugeinrichtung auf die Drehmomentabgabe einer Brennkraftmaschine eines Hybridantriebs. Zur Verbesserung des Messverfahrens wird eine von der Hybridfahrzeugeinrichtung bewirkte Veränderung des von der Brennkraftmaschine abgegebenen Drehmoments durch eine komplementäre Veränderung des von der Elektromaschine abgegebenen Drehmoments ausgeglichen.

Die DE 10 2008 000869 A1 offenbart ein Verfahren zur Bestimmung des Drehmoments einer Verbrennungskraftmaschine für ein Kraftfahrzeug mit Hilfe einer an die Verbrennungskraftmaschine gekoppelten Elektromaschine. Dabei ist vorgesehen, dass das Drehmoment der Verbrennungskraftmaschine in mindestens einem Betriebspunkt durch Vergleich mit dem bekannten Drehmoment der Elektromaschine bestimmt wird.

Meist sind Fahrzeugantriebsstränge nicht mit Sensoren ausgestattet, die eine direkte Messung von aktuell erzeugten Antriebsmomenten ermöglichen. Der fehlerfreie Betrieb eines Antriebsaggregates bzw. eine bestimmungsgemäße Momentenerzeugung lässt sich somit nicht direkt ermitteln. Bei Verbrennungsmotoren sind bestimmungsgemäße Verbrennungen, insbesondere bei geringer Belastung, nur schwer nachweisbar. Zur Verfügung stehende verbrennungsmotorische Messsignale sind meist nicht ausreichend. Bei nicht bestimmungsgemäßen Verbrennungen besteht die Gefahr, dass unverbrannter Kraftstoff in den Ölkreislauf oder den Abgastrakt gelangt und Schädigungen oder einen Brand hervorruft, z.B. bei längerer Bergabfahrt eines konventionellen Fahrzeugs.

Bei Hybrid-Kraftfahrzeugen besteht der Fahrzeugantriebsstrang aus einem Verbrennungsmotor und mindestens einem weiteren Antriebsaggregat, z.B. einer elektrischen Maschine oder einem Hydraulikmotor. Während des Fahrens mit abgeschaltetem Verbrennungsmotor kann ein Start des Verbrennungsmotors erforderlich sein, z.B. falls der Fahrer mehr Leistung anfordert, als das weitere Antriebsaggregat liefern kann. Da beim Hybridfahrzeug der Verbrennungsmotor von einem weiteren Antriebsaggregat mitgeschleppt werden kann, sind oben beschriebene Folgen ebenfalls möglich, falls die bestimmungsgemäßen Verbrennungen nicht einsetzen.

Zur Vermeidung dieser Folgen ist es notwendig, die bestimmungsgemäße Funktion der Komponenten, der Antriebsaggregate und des gesamten Fahrzeugantriebsstrangs und somit deren bestimmungsgemäße Momentenerzeugung zu überwachen. Negative Auswirkungen auf den Fahrkomfort und die Fahrsicherheit, auch bei geringen Aggregatbelastungen, sind dabei zu vermeiden.

Offenbarung der Erfindung

Bei dem erfindungsgemäßen Verfahren zur Überwachung der bestimmungsgemäßen Funktion mindestens einer ersten und einer zweiten Komponente eines Fahrzeugantriebsstrangs ist vorgesehen, dass die erste Komponente eines Fahrzeugantriebsstrangs mit einem ersten und die zweite Komponente mit einem zweiten Testsignal angesteuert werden. Die erste Komponente hat in Abhängigkeit des ersten Testsignals eine erste Wirkung auf das an einer Antriebswelle anliegende Drehmoment, und die zweite Komponente hat in Abhängigkeit des zweiten Testsignals eine zweite Wirkung auf das an der Antriebswelle anliegende Drehmoment. Die Testsignale werden erfindungsgemäß so vorgegeben, dass sich die Wirkungen der ersten und der zweiten Komponente auf das an der Antriebswelle anliegende Drehmoment gegenseitig aufheben, wenn die erste und die zweite Komponente bestimmungsgemäß funktionieren. Bei einer nicht bestimmungsgemäßen Funktion heben sich die Wirkungen der ersten und der zweiten Komponente aufgrund der beiden Testsignale nicht auf. Auf eine nicht bestimmungsgemäße Funktion mindestens einer der zwei Komponenten wird somit beispielsweise aufgrund einer nicht bestimmungsgemäßen Drehzahländerung oder Drehzahlbeschleunigung z.B. einer Antriebswelle im Antriebsstrang geschlossen.

Hierzu wird beispielsweise eine erste Komponente mit einem ersten Testsignal so angesteuert, dass diese ein erhöhtes Drehmoment auf die Antriebswelle abgibt, und eine zweite Komponente wird gleichzeitig mit einem zweiten Testsignal angesteuert, dass diese ein entsprechend reduziertes Drehmoment auf die Antriebswelle abgibt. Da beide Komponenten gemeinsam auf die Antriebswelle wirken, heben sich die Wirkungen gegenseitig auf.

Hierbei ist vorteilhaft, dass bei bestimmungsgemäßer Funktion der Komponenten, der Fahrkomfort und die Fahrsicherheit während des Ablaufs dieses Überwachungsverfahrens nicht durch einen unerwarteten Drehmomentanstieg oder Drehmomentabfall gestört werden. Auch eine Störung des Fahrzeugantriebsstrangs wird somit vermieden.

Ferner ist erfindungsgemäß eine Vorrichtung zur Überwachung der bestimmungsgemäßen Funktion mindestens einer ersten und einer zweiten Komponente eines Fahrzeugantriebsstrangs vorgesehen, wobei die erste und die zweite Komponente jeweils eine Wirkung auf das an einer Antriebswelle anliegende Drehmoment haben. Es sind Mittel vorgesehen, die die erste Komponente mit einem ersten Testsignal und die zweite Komponente mit einem zweiten Testsignal ansteuern. Die erste Komponente hat in Abhängigkeit des ersten Testsignals eine erste Wirkung auf das an einer Antriebswelle anliegende Drehmoment und die zweite Komponente hat in Abhängigkeit des zweiten Testsignals eine zweite Wirkung auf das an der Antriebswelle anliegende Drehmoment. Von dem Mittel wird das erste und das zweite Testsignal so vorgegeben, dass sich die Wirkungen der ersten und der zweiten Komponente auf das an der Antriebswelle anliegende Drehmoment gegenseitig aufheben, wenn die erste und die zweite Komponente bestimmungsgemäß funktionieren. Falls sich die Wirkungen der ersten und der zweiten Komponente aufgrund der beiden Testsignale nicht aufheben, wird auf eine nicht bestimmungsgemäße Funktion mindestens einer der mindestens zwei Komponenten geschlossen.

Durch die in den abhängigen Ansprüchen aufgeführten Maßnahmen sind vorteilhafte Weiterbildungen und Verbesserungen des im unabhängigen Anspruch angegebenen Verfahrens möglich.

In einer Weiterbildung der Erfindung ist vorgesehen, dass dass ein mathematisches Modell, das mindestens einen Teil des Fahrzeugantriebsstrangs beschreibt, verwendet wird, um die jeweiligen Wirkungen der Komponenten zu berechnen, und dass Abweichungen zwischen den berechneten und der mittels Sensoren erfassten Wirkungen erfasst werden..Das mathematische Modell kann im regelungstechnischen Sinn als dynamisches Modell oder als ein Beobachtermodell und/oder ein ein Störgrößenbeobachter umgesetzt sein, um das Verhalten des Fahrzeugantriebsstranges ohne Anregung durch Testsignale und/oder das Verhalten des Fahrzeugantriebsstranges mit Anregung durch Testsignale nachzubilden bzw. zu modellieren. Durch Vergleich der modellierten bzw. beobachteten Größen (z.B. Drehzahl oder Beschleunigung der Antriebswelle) mit am realen Fahrzeugantriebsstrang ermittelten Größen werden Reaktionen der Komponenten auf die Testsignale erfasst. Dieses Modell berücksichtigt insbesondere die unterschiedliche Wirkung der Testsignale auf die Aggregate, z.B. durch die Ansteuerdynamik oder die Aggregatdynamik (z.B. verzögerter Strömungsauf- oder -abbau im Drehmomentwandler) oder Zeitverzögerungen in der Signalübertragung (z.B. CAN-Verzögerung) von der Fahrzeugsteuerung. Eine Abweichung der Wirkung der Komponenten von deren bestimmungsgemäßer Funktionalität kann nur dann erkannt werden, wenn die bestimmungsgemäße Funktionalität in Abhängigkeit der Testsignale und/oder des jeweiligen Betriebszustands des Fahrzeugantriebsstrangs aufgrund der berechneten Größen einerseits und die mittels Sensoren erfassten Größen andererseits bekannt sind. Durch den Vergleich der berechneten und der mittels Sensoren erfassten Wirkungen wird vorteilhaft eine Abweichung der Komponenten von deren bestimmungsgemäßer Funktionalität erkannt.

In einer Weiterbildung der Erfindung ist vorgesehen, dass bei nicht bestimmungsgemäßer Funktion, also wenn sich die Wirkungen der ersten und der zweiten Komponente auf das an der Antriebswelle anliegende Drehmoment nicht gegenseitig aufheben und Abweichungen zwischen den berechneten und der mittels Sensoren erfassten Wirkungen erkannt werden, die Ansteuerung mindestens einer Komponente für den weiteren Betrieb der mindestens einen Komponente verändert wird, so dass die nicht bestimmungsgemäße Funktionalität der Komponente mindestens teilweise kompensiert wird. Vorteil dieser Ausgestaltung ist, dass somit auch bei nicht bestimmungsgemäßer Funktionalität ein weiterer Betrieb des Fahrzeugantriebsstrangs unter Berücksichtigung der nicht bestimmungsgemäßen Funktionalität der Komponente ermöglicht wird.

In einer Weiterbildung der Erfindung ist vorgesehen, dass in Abhängigkeit der erfassten Abweichung die Ansteuerung mindestens einer Komponente für den weiteren Betrieb der mindestens einen Komponente verändert wird, so dass die nicht bestimmungsgemäße Funktionalität der Komponente mindestens teilweise kompensiert wird. Vorteil dieser Ausgestaltung ist, dass somit auch bei nicht bestimmungsgemäßer Funktionalität ein weiterer Betrieb des Fahrzeugantriebsstrangs unter Berücksichtigung der nicht bestimmungsgemäßen Funktionalität der Komponente ermöglicht wird.

In einer Weiterbildung der Erfindung ist vorgesehen, dass die Ansteuerung für den weiteren Betrieb der Komponente so verändert wird, dass bei einer folgenden Ansteuerung der ersten und der zweiten Komponente mit den Testsignalen keine Abweichung erfasst wird. Mittels der geänderten Ansteuerung der Komponente wird die nicht bestimmungsgemäße Funktionalität der Komponente kompensiert.und der weitere Betrieb des Fahrzeugantriebsstrangs unter Berücksichtigung der nicht bestimmungsgemäßen Funktionalität der Komponente ermöglicht.

Es ist somit vorgesehen, die Ansteuerung der Komponente zu adaptieren. Beispielsweise kann eine Adaption des Ansteuerungsverhaltens eines Übertragungselementes (Anfahrkupplung, Drehmomentwandler, Wandlerüberbrückungskupplung, getriebeinterne Kupplung, ...) im schlupfenden Betrieb erfolgen. Dabei werden aus der der Reaktion des Aggregates auf die Testsignale, Informationen über das aktuelle Ansteuerungsverhalten des Aggregates gewonnen.

In einer Weiterbildung der Erfindung ist vorgesehen, dass während der Ansteuerung mit den jeweiligen Testsignalen ein Übertragungselement des Fahrzeugsantriebsstrangs schlupfend betrieben wird. Dieses Übertragungselement ist zwischen einem der Aggregate, die dem Antrieb des Fahrzeugs dienen (zum Beispiel ein Verbrennungsmotor, eine elektrische Maschine oder ein Hydraulikmotor) und mindestens einem angetriebenen Fahrzeugrad angeordnet. Das Übertragungselement kann dabei z.B. durch eine Anfahrkupplung, einen Drehmomentwandler, eine Wandlerüberbrückungskupplung und/oder eine getriebeinterne Kupplung realisiert sein. Technischer Hintergrund dieser Ausgestaltung ist, dass sich die Wirkungen der Komponenten auf das an einer Antriebswelle anliegende Drehmoment nicht direkt auf mindestens ein angetriebenes Antriebsrad übertragen. Damit wird ein Teil des Fahrzeugantriebsstrangs von dem mindestens einen angetriebenen Antriebsrad beziehungsweise von einer Antriebsachse entkoppelt. Somit werden negative Auswirkungen der Überwachungsfunktion bei nicht bestimmungsgemäßer Funktionalität mindestens einer der beiden Komponenten auf die Antriebsachse vermieden. Dadurch wird auch ein negativer Einfluss auf den Fahrkomfort und die Fahrsicherheit vermieden. Zusätzlich sind damit Reaktionen auf die Testsignale und daraus resultierenden Wirkungen auf die Antriebswelle, wie beispielsweise Drehzahländerungen der Antriebswelle, sowie die Momentenerzeugung der Komponenten gut erfassbar. Als weiterer Vorteil wird der Einfluss der Antriebsachse auf den Fahrzeugantriebsstrang entkoppelt. Störungen der Antriebsachse (z.B. aufgrund von Fahrbahnunebenheiten, Triebstrangsschwingungen, Getriebeschaltvorgängen, ESP- oder Bremseingriffen) wirken sich weniger auf den zu überwachenden Fahrzeugantriebsstrang aus. Somit werden die Reaktionen des Fahrzeugantriebsstrangs auf die Testsignale weniger von der Antriebsachse beeinflusst.

In einer Weiterbildung der Erfindung ist vorgesehen, dass die Testsignale so bestimmt werden, dass die Wirkungen der damit jeweils angesteuerten Komponenten mittelwertfrei sind. Anschaulich gesprochen bedeutet mittelwertfrei, dass die auftretenden Wirkungen gleichmäßig um einen Ausgangszustand verteilt sind. Ein Beispiel für derartige Wirkungen könnten Drehmomentschwingungen im Antriebsstrang des Fahrzeugs sein. Trägt man diese in einem Koordinantensystem über der Zeit auf, so würden sich diese gleichmäßig um eine Nulllinie verteilen. Z.B. wäre ein gleichmäßig um eine Nulllinie verteilter sinusförmiger Verlauf mittelwertfrei. Die Testsignale werden darüberhinaus so gewählt, dass die Frequenz der auftretenden Wirkungen so hoch ist, dass durch das Ansteuern der Komponenten mit den Testsignalen keine für die Insassen des Fahrzeugs spürbare zusätzliche Beschleunigung oder Verzögerung des Fahrzeuges verursacht werden. Diese Auswirkungen aufgrund dieser Testsignale sind für die Insassen nicht spürbar, da das Fahrzeug mit seinem hohen Gewicht und dem damit verbundenen großen Trägheitsmoment nur sehr verzögert und träge auf die Testsignale reagiert. Selbst bei nicht bestimmungsgemäßer Funktionalität einer Komponente würde das Fahrzeug eine mittelwertfreie, hochfrequente Wirkung erfahren, die vorteilhaft eine Störung des Fahrkomforts minimiert. Insbesondere kann so eine hohe Fahrsicherheit erreicht werden. Für die Bestimmung der Testsignale wird beispielsweise ebenfalls ein mathematisches Modell (siehe oben) mindestens eines Teils des Antriebstrangs verwendet, damit eine Ansteuerung der Komponenten mit diesen Testsignalen bei bestimmungsgemäßer Funktion der Komponenten zu den sich gegenseitig aufhebenden Wirkungen auf den Fahrzeugsantriebsstrang führt. Dabei werden beispielsweise physikalische Grenzen der Komponenten und verzögerte und/ oder verschliffene Reaktionen der Komponenten auf die Ansteuerung berücksichtigt.

In einer Weiterbildung der Erfindung ist vorgesehen, dass die Testsignale in Abhängigkeit des aktuellen Zustands des Fahrzeugantriebsstrangs bestimmt werden. Die sich durch die Ansteuerung mit den Testsignalen ergebenden Wirkungen sind in Abhängigkeit des jeweiligen Zustands des Fahrzeugantriebsstrangs unterschiedlich. Beispielsweise können die Testsignale in Abhängigkeit der eingelegten Gangstufe eines Fahrzeuggetriebes störende Triebstrangeigenfrequenzen anregen. Entsprechend sollte die Anregung mit Testsignalen nur bei geeigneten Zuständen des Fahrzeugantriebstrangs erfolgen damit sich die Wirkungen der Komponenten auf die Antriebswelle gegenseitig aufheben und vorteilhaft den Betrieb des Fahrzeuges nicht beeinträchtigen.

Insbesondere werden somit die Wirkungen auf die Antriebswelle bei nicht bestimmungsgemäßer Funktionalität einer Komponente reduziert.

In einer Weiterbildung der Erfindung ist vorgesehen, dass während der Durchführung des erfindungsgemäßen Verfahrens eine Störung der ersten und der zweiten Komponente sowie der Antriebswelle des Fahrzeugsantriebstrangs vermieden wird. Beispiele für solche Störungen sowohl auf die mit Testsignalen angesteuerten Komponenten als auch auf die angekoppelte Antriebswelle sind Einwirkungen, die einen Drehmomentanstieg bzw. einen Drehmomentabfall an diesen Teilen des Fahrzeugsantriebsstrangs verursachen. So werden beispielsweise Schaltungen eines Getriebes, welches an die Antriebswelle oder an eine der Komponenten gekoppelt ist, während des Ablaufs des Verfahrens nicht durchgeführt. Vorteil dieser Ausgestaltung ist, dass die Wirkungen der Komponenten auf die Antriebswelle nicht verfälscht werden und somit gegebenenfalls die Erfassung von Abweichungen und deren Stärke ermöglicht wird.

In einer Weiterbildung der Erfindung ist vorgesehen, dass die erste oder die zweite Komponente ein Aggregat oder ein Teil eines Aggregats aus der Gruppe der Aggregate eines Fahrzeugantriebsstrangs (100) ist, insbesondere eine elektrische Maschine (103) und/oder einen Verbrennungsmotor (101) und/oder einen Hydraulikmotor und/oder ein Übertragungselement (102, 104, 105). Beispielsweise kann somit eine Komponente ein einzelnes Aggregat repräsentieren. Dies kann z.B. ein Antriebsaggregat, insbesondere eine elektrische Maschine oder einen Verbrennungsmotor eines Hybridfahrzeuges oder ein Übertragungselement sein. Übertragungselemente sind beispielsweise ein Anfahrelement und/oder eine Kupplung und/oder einen Drehmomentwandler und/oder eine Wandlerüberbrückungskupplung und/oder eine getriebeinterne Kupplung und/oder eine automatisierte Anfahrkupplung. Eine Komponente kann beispielsweise auch eine einzelne Komponente eines Aggregates repräsentieren. Dies kann z.B. eine Drosselklappe oder ein einzelner Zylinder eines Verbrennungsmotors oder eine Wicklung einer elektrischen Maschine sein, die beispielsweise an einer elektrischen Wechselspannung angeschlossen ist. Somit können die erste und die zweite Komponente jeweils einzelne Aggregate, einzelne Komponenten eines oder zweier Aggregate, oder z.B. ein Aggregat und eine einzelne Komponente eines Aggregates repräsentieren. Eine Ansteuerung einzelner Antriebsaggregate mit einem Testsignal führt somit zu einer Reaktion dieses bestimmten einzelnen Antriebsaggregates.

Eine Ansteuerung einer einzelnen Komponente eines Aggregates mit einem Testsignal führt somit zu einer Reaktion dieser bestimmten einzelnen Komponente eines Aggregates. Somit kann die bestimmungsgemäße Funktion einer einzelnen Komponente eines Aggregats geprüft werden. Je nach Auswahl von Testsignalen und anzusteuernder Komponenten lassen sich z.B. nicht bestimmungsgemäße Verbrennungen an einzelnen Zylindern eines Verbrennungsmotors erkennen und geeignete Ersatzmaßnahmen einleiten, z.B. das Abstellen der betroffenen Zylinder. Vorteilhaft lässt sich somit die bestimmungsgemäße Funktionalität einzelner Aggregate und einzelner Teile von Aggregaten überwachen.

Insbesondere ist der Einsatz des Verfahrens und der Vorrichtung bei Parallelhybriden ohne Trennkupplung zwischen Verbrennungsmotor und Elektrischen Maschine oder mit einer Trennkupplung, die nur in den zwei Zuständen (geschlossen oder geöffnet) betrieben wird, z.B. eine Impulskupplung, vorteilhaft, da eine Diagnose des Verbrennungsmotors während eines geregelten Schlupfbetriebes der Trennkupplung nicht möglich ist. Insbesondere beim Start des Verbrennungsmotors nach dem elektrischen Fahren oder nach dem Segeln mit abgeschaltetem Verbrennungsmotor ist der Einsatz vorteilhaft.

Das dargestellte Verfahren und die Vorrichtung können bei Fahrzeugen, insbesondere auch bei Hybrid-, Elektro- oder Hydraulikfahrzeugen und Fahrzeugen mit konventionellem Verbrennungsmotorantrieb, eingesetzt werden.

Kurze Beschreibung der Zeichnungen

Die Erfindung lässt zahlreiche Ausführungsformen zu. Zwei werden anhand der in den Zeichnung dargestellten Figuren näher erläutert.

Es zeigt:

Figur 1: Prinzipdarstellung eines Fahrzeugantriebsstrangs eines Fahrzeuges mit Hybridantrieb

Figur 2: schematisches Ablaufdiagramm eines Ausführungsbeispiels des erfindungsgemäßen Verfahrens

Figur 3: Prinzipdarstellung eines vereinfachten Modells eines parallelhybridischen Fahrzeugantriebsstranges

Ausführungsformen der Erfindung

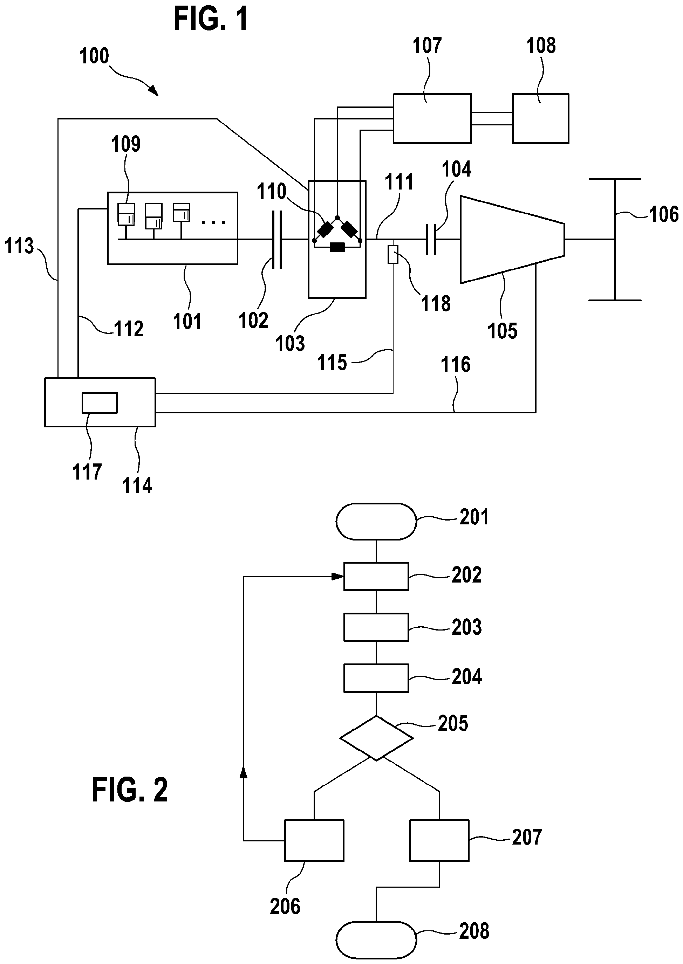

Figur 1 zeigt eine Prinzipdarstellung eines Fahrzeugantriebsstrangs 100 eines Fahrzeuges mit einem Hybridantrieb. Ein erstes Antriebsaggregat, nämlich ein Verbrennungsmotor 101, ist über eine Trennkupplung 102 mit einem zweiten Antriebsaggregat, nämlich einer elektrischen Maschine 103, koppelbar. Beide Antriebsaggregate wirken bei geschlossener Trennkupplung 102 auf eine Antriebswelle 111. Die Antriebswelle 111 ist über ein weiteres Übertragungselement 104, z.B. ein Drehmomentwandler oder eine Reibkupplung, mit einem Getriebe 105 koppelbar. Ausgangsseitig ist das Getriebe 105 mechanisch mit einer Antriebsachse mit Antriebsrädern 106 verbunden. Eine Spannungsquelle 108, beispielsweise eine Batterie, stellt über einen Wechselrichter 107 der elektrischen Maschine 103 elektrische Energie zur Verfügung. Der Wechselrichter 107 wandelt hierzu den Gleichstrom der Spannungsquelle 108 in Drehstrom um, welcher phasenverschoben durch jede der einzelnen Wicklungen 110 der elektrischen Maschine 103 fließt, wobei die einzelnen Wicklungen 110 jeweils an einer Phase angeschlossen sind. Ein Steuergerät 114 steuert über Signale 112, 113, 116 einzelne Komponenten, beispielsweise einzelne Zylinder 109 des Verbrennungsmotors 101 oder einzelne Wicklungen 110, die jeweils an eine Phase angeschlossen sind, oder die Aggregate selbst 101, 102, 103, 104, 105, 107, 108 an. Über Übertragungsmittel 115, beispielsweise Übertragungsleitungen, empfängt das Steuergerät Signale von Sensoren 118, beispielsweise einem Drehzahlsensor. In Form von Software oder Hardware sind in dem Steuergerät mathematische Modelle 117 vorhanden, die die Funktionsweise mindestens eines Teils des Fahrzeugantriebsstrangs in Abhängigkeit von Betriebsparametern 109, 110, 112, 113, 115, 116 berechnen. Im Steuergerät 114 werden die Ergebnisse dieser Berechnungen für die Überwachung der bestimmungsgemäßen Funktionalität sowie zur Bestimmung der weiteren Ansteuerung des Fahrzeugsantriebsstrangs 100 verwendet.

Figur 2 zeigt ein schematisches Ablaufdiagramm eines Ausführungsbeispiels des erfindungsgemäßen Verfahrens. In einem ersten Schritt 201 startet das Verfahren. In einem zweiten Schritt 202 werden die jeweiligen zwei Testsignale 112, 113, insbesondere zusätzlich zu der üblichen Ansteuerung oder den Ansteuersignalen, an die Komponenten 109, 110 übertragen. Anschließend werden in einem dritten Schritt 203 Signale der Sensoren 118 am Fahrzeugsantriebsstrang eingelesen. Diese Signale werden in einem vierten Schritt 204 mit den Ergebnissen des mathematischen Modells des Fahrzeugantriebsstrangs verglichen. Falls Abweichungen zwischen den Signalen und den Ergebnissen des mathematischen Modells festgestellt werden, wird auf eine nicht bestimmungsgemäße Funktion mindestens einer der mindestens zwei Komponenten geschlossen. In diesem Ausführungsbeispiel verzweigt das Verfahren in diesem Fall in einem fünften Schritt 205 zum sechsten Schritt 206, in dem die weitere Ansteuerung mindestens einer Komponente 109, 110 in Abhängigkeit der festgestellten Abweichung verändert fortgeführt wird. Im Anschluss verzweigt das Verfahren zu dem zweiten Schritt 202 und das Verfahren wird nochmals durchgeführt. Bei der sich anschließenden wiederholten Durchführung des Verfahrens wird geprüft, ob die veränderte Ansteuerung zu der bestimmungsgemäßen Funktion der Komponente 109, 110 führt. Werden in dem vierten Schritt 204 keine Abweichungen festgestellt, so verzweigt das Verfahren in dem fünften Schritt 205 zu einem siebten Schritt 207, in dem die weitere Ansteuerung der Komponenten 109, 110 unverändert fortgeführt wird. Mit einem achten Schritt 208 endet das Verfahren. Werden in dem vierten Schritt 204 wiederholt, insbesondere gleichbleibende, Abweichungen festgestellt, verzweigt das System zu einer hier nicht näher erläuterten Fehlerbehandlungsroutine, beispielsweise zu einem Einstellen des verbrennungsmotorischen Antriebs.

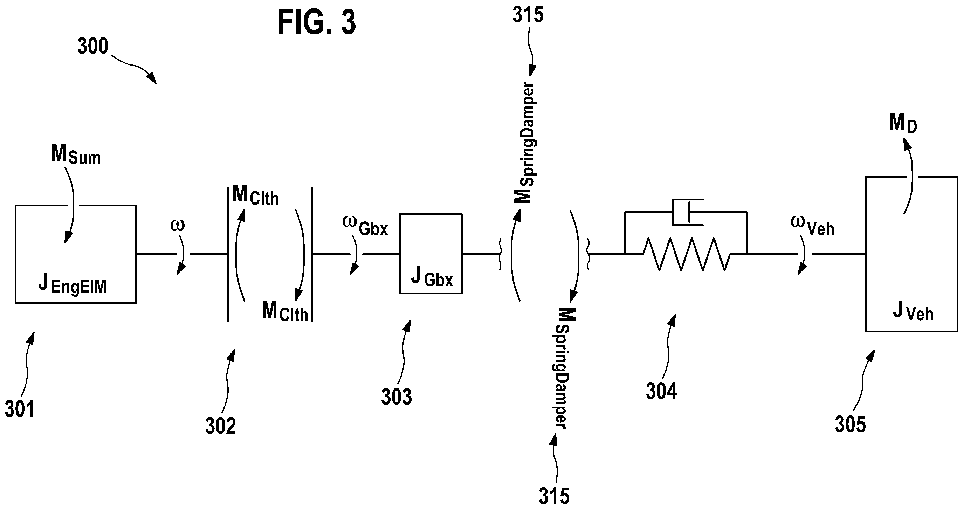

Die Fig. 3 zeigt ein vereinfachtes Modell eines parallelhybridischen Fahrzeugantriebsstranges mit einem Verbrennungsmotor 101 und einer elektrischen Maschine 103, die zu einer gemeinsamen Drehmasse 301 zusammengefasst sind. Beide treiben über eine Anfahrkupplung 302 und ein automatisiertes Getriebe 303 die nicht dargestellten Antriebsräder des Fahrzeugs an. Das Getriebe 303 ist über ein Drehfeder-/Dämpferelement 304 mit einer Drehmasse 305 verbunden, welche die Ersatzträgheiten der Triebstrangteile, Räder und der translatorisch bewegten Fahrzeugmasse nachbildet. Das Drehfeder-/Dämpferelement 304 bildet Elastizitäten im Triebstrang nach, die meist von den Steifigkeiten der Seitenwellen, also den Antriebswellen vom Differentialgetriebe zu den Rädern, bestimmt werden.

Die Eingangsseite der Anfahrkupplung 302 ist mit der Drehmasse 301 des Verbrennungsmotors 101 und der elektrischen Maschine 103 verbunden, diese Komponenten rotieren mit der Winkelgeschwindigkeit ω, die von einem nicht dargestellten Drehzahlgeber ermittelt und einer Fahrzeugsteuerung übermittelt wird. Die gemeinsame Drehmasse 301 besitzt das Trägheitsmoment JEngEIM, das sich aus den Trägheiten von Verbrennungsmotor 101, der elektrischen Maschine 103 und der Eingangsseite der Anfahrkupplung 302 zusammensetzt. Auf die Drehmasse 301 wirken das in Summe von Verbrennungsmotor 101 und der elektrischen Maschine 103 erzeugte Drehmoment MSum sowie das von der Anfahrkupplung 302 aktuell übertragene Drehmoment MClth. Die Ausgangsseite der Anfahrkupplung 302 ist mit dem automatisierten Getriebe 303 verbunden. Beide Komponenten rotieren mit der Winkelgeschwindigkeit ωGbx, die ebenfalls von einem nicht dargestellten Drehzahlgeber ermittelt und der Fahrzeugsteuerung übermittelt wird. Die gemeinsame Drehmasse aus den Trägheiten von Getriebe 303 und der Ausgangsseite der Anfahrkupplung 302 besitzt ein Trägheitsmoment JGbx. Auf diese Drehmasse wirken das von der Anfahrkupplung 302 aktuell übertragene Drehmoment MClth sowie das

vom Drehfeder-/Dämpferelement 304 aktuell übertragene Moment MSpringDamper.

Das Drehfeder/Dämpferelement 304 ist mit einer Drehmasse 305 verbunden, die mit einem Trägheitsmoment JVeh weitere Triebstrangteile, Räder und die translatorisch bewegte Fahrzeugmasse nachbildet und mit einer Winkelgeschwindigkeit ωVeh rotiert. Auf die Drehmasse 305 wirken das vom Drehfeder-/Dämpferelement 304 aktuell übertragene Moment MSpringDamper und ein Fahrwiderstandsmoment MD, das den Roll-, Luft- und Steigungswiderstand usw. nachbildet.

Der Einfachheit halber sind sämtliche Trägheiten, Winkelgeschwindigkeiten und Drehmomente sowie weitere Parameter mit den realen Übersetzungen von Getriebe, Achsgetriebe bzw. den Reifenhalbmessern umgerechnet und reduziert, so dass in Fig. 3 von Übersetzungen i=1 ausgegangen wird.

Fahrzeuge mit einer hybriden Antriebsstruktur weisen einen Verbrennungsmotor 101 und als zweites Antriebsaggregat meistens eine elektrische Maschine 103 auf. So kann das Antriebsmoment während des Fahrbetriebes des Hybridfahrzeuges von beiden Antriebsaggregaten aufgebracht werden.

In einem Ausführungsbeispiel gemäß Figur 3 wird beispielsweise die Anfahrkupplung 302 schlupfgeregelt betrieben. Dabei ergibt sich eine Differenzwinkelgeschwindigkeit Δω zwischen der Winkelgeschwindigkeit ω der gemeinsamen Drehmasse 301 von Verbrennungsmotor 101 und elektrischer Maschine 103 beziehungsweise der Eingangsseite der Anfahrkupplung 302 und der Winkelgeschwindigkeit ωGbx der gemeinsamen Drehmasse 303 von Getriebe und Ausgangsseite der Anfahrkupplung 302:

$$\Delta\omega = \omega - \omega Gbx$$

Das Ausführungsbeispiel geht von einem positiven für den Betrieb des Fahrzeuges vorgegebenen Summendrehmoment MSum aus. Dann ist auch die Differenzwinkelgeschwindigkeit Δω positiv. Es ist ein Schlupfregler vorgesehen, der die Differenzwinkelgeschwindigkeit Δω mit einem in diesem Fall positiven Sollwert ΔωDes vergleicht und mittels einer Ansteuerung bzw. über Ansteuersignale das von der schlupfenden Anfahrkupplung 302 aktuell übertragene Drehmoment MClth beeinflusst, indem mittels eines Aktors der Anpressdruck der Kupplungsbeläge verändert wird. Ist z.B. die Differenzwinkelgeschwindigkeit Δω größer als der positive Sollwert ΔωDes, so wird aufgrund der Ansteuersignale des Schlupfreglers das von der schlupfenden Anfahrkupplung 302 aktuell übertragene Drehmoment MClth erhöht, wodurch sich die Differenzwinkelgeschwindigkeit Δω verringert und dem Sollwert ΔωDes annähert.

Bei Übergängen zwischen geschlossener und schlupfender Anfahrkupplung 302 wird der Sollwert Δω

Des vorzugsweise sprungfrei vorgegeben.

Wird nun erfindungsgemäß der Verbrennungsmotor 101 mit einem ersten Testsignal angesteuert, so wird zum Beispiel das vom Verbrennungsmotor 101 erzeugte Drehmoment beeinflusst und somit auch das Summendrehmoment MSum. Dadurch verändert sich die Winkelgeschwindigkeit ω der gemeinsamen Drehmasse 301 von Verbrennungsmotor 101 und elektrischer Maschine 103 und somit auch die Differenzwinkelgeschwindigkeit Δω.

Ohne weitere Maßnahmen würde der Schlupfregler auf die zusätzliche Beschleunigung der gemeinsamen Drehmasse 301 von Verbrennungsmotor 101 und elektrischer Maschine 103 reagieren und das von der Anfahrkupplung 302 aktuell übertragene Drehmoment MClth beeinflussen, verbunden mit negativen Auswirkungen auf den Fahrkomfort.

Erfindungsgemäß wird stattdessen mit Hilfe eines mathematischen Modells vor der Ansteuerung mittels des ersten Testsignals die Auswirkung des ersten Testsignals auf die Differenzwinkelgeschwindigkeit Δω berechnet. Diese Auswirkung ist die Basis zur Ermittlung eines zweiten Testsignals. Beispielsweise wird das aufgrund des ersten Testsignals zusätzliche erzeugte Drehmoment durch das Trägheitsmoment JEngEIM der gemeinsamen Drehmasse 301 von Verbrennungsmotor 101 und elektrischer Maschine 103 dividiert und anschließend integriert. Es ergibt sich eine Differenzwinkelgeschwindigkeit ΔωTest. Das zweite Testsignal wird daraus so bestimmt, dass der Schlupf der Anfahrkupplung 302 so beeinflusst wird, dass die Auswirkung des ersten Testsignals auf die Differenzwinkelgeschwindigkeit Δω kompensiert wird. Das zweite Testsignal wird in diesem Beispiel hierzu bei der Vorgabe des Sollwertes ΔωDes für den Schlupfregler berücksichtigt. Bei bestimmungsgemäßer Funktion des Antriebs ändern sich nun die Differenzwinkelgeschwindigkeit Δω und der Sollwert ΔωDes gleichermaßen. Bei der Überwachung der bestimmungsgemäßen Funktion werden somit gleichzeitig jeweils eine Komponente mit dem ersten Testsignal und eine zweite Komponente mit dem zweiten Testsignal angesteuert. Eine Änderung des von der schlupfenden Anfahrkupplung 302 aktuell übertragenen Drehmoments MClth durch den Schlupfregler ist somit nicht notwendig. Die Auswirkungen der beiden Testsignale heben sich in ihrer Wirkung auf das von der schlupfenden Anfahrkupplung 302 aktuell übertragene Drehmoment MClth auf. Damit heben sie sich auch in ihrer Wirkung auf das Drehmoment einer Antriebswelle der gemeinsamen Drehmasse 303 von Getriebe und Ausgangsseite der Anfahrkupplung 302 bzw. einer Antriebswelle der Drehmasse 305, welche unter anderem die Ersatzträgheiten der translatorisch bewegten Fahrzeugmasse nachbildet, auf. Falls sich die Auswirkungen der beiden Testsignale nicht aufheben und somit nicht mit dem mittels eines mathematischen Modells vorbestimmten Verhalten übereinstimmen, wird auf eine nicht bestimmungsgemäße Funktion mindestens einer der mindestens zwei Komponenten geschlossen. Beispielsweise wenn eine am Fahrzeugantriebsstrang ermittelte Winkelgeschwindigkeit oder Winkelbeschleunigung von einer mit Hilfe des mathematischen Modells vorbestimmten abweicht.

In einem weiteren Ausführungsbeispiel gemäß Figur 3 wird beispielsweise der Verbrennungsmotor 101 mit einem ersten Testsignal angesteuert, die elektrische Maschine 103 mit einem zweiten Testsignal.

## Patentansprüche

1. Verfahren zur Überwachung der bestimmungsgemäßen Funktion mindestens einer ersten und einer zweiten Komponente (109, 110) eines Fahrzeugantriebsstrangs (100), wobei die erste Komponente (109) mit einem ersten Testsignal (112) und die zweite Komponente (110) mit einem zweiten Testsignal (113) angesteuert wird,

   wobei die erste Komponente (109) in Abhängigkeit eines ersten Testsignals (112) eine erste Wirkung auf das an einer Antriebswelle (111) anliegende Drehmoment hat und die zweite Komponente (110) in Abhängigkeit eines zweiten Testsignals (113) eine zweite Wirkung auf das an der Antriebswelle (111) anliegende Drehmoment hat,

   **dadurch gekennzeichnet, dass** das erste und das zweite Testsignal (112, 113) so vorgegeben werden, dass sich bei bestimmungsgemäßer Funktion die Wirkungen der ersten und der zweiten Komponente (109, 110) auf das an der Antriebswelle (111) anliegende Drehmoment gegenseitig aufheben.

2. Verfahren nach einem der vorhergehenden Ansprüche, **dadurch gekennzeichnet, dass** ein mathematisches Modell (117), das mindestens einen Teil des Fahrzeugantriebsstrangs (100) beschreibt, verwendet wird, um die jeweiligen Wirkungen der Komponenten (109, 110) zu berechnen, und dass Abweichungen zwischen den berechneten und der mittels Sensoren (118) erfassten Wirkungen erfasst werden.

3. Verfahren nach Anspruch 2, **dadurch gekennzeichnet, dass** das mathematische Modell (117), das mindestens einen Teil des Fahrzeugantriebsstrangs (100) beschreibt, verwendet wird, um die jeweiligen Wirkungen der Komponenten (109, 110) ohne der Ansteuerung mit den jeweiligen Testsignalen (112, 113) zu berechnen und dass Abweichungen zwischen den berechneten und der mittels Sensoren (118) erfassten Wirkungen erfasst werden.

4. Verfahren nach einem der vorhergehenden Ansprüche, **dadurch gekennzeichnet, dass** bei nicht bestimmungsgemäßer Funktion, wenn sich die Wirkungen der ersten und der zweiten Komponente (109, 110) auf das an der Antriebswelle anliegende Drehmoment nicht gegenseitig aufheben, die Ansteuerung mindestens einer Komponente (109, 110) für den weiteren Betrieb der mindestens einen Komponente (109, 110) verändert wird.

5. Verfahren nach Anspruch 2 oder 3, **dadurch gekennzeichnet, dass** in Abhängigkeit der erfassten Abweichung die Ansteuerung mindestens einer Komponente (109, 110) für den weiteren Betrieb der mindestens einen Komponente (109, 110) verändert wird.

6. Verfahren nach Anspruch 4 oder 5, **dadurch gekennzeichnet, dass** die Ansteuerung für den weiteren Betrieb der Komponente (109, 110) so verändert wird, dass bei einer folgenden Ansteuerung der ersten und der zweiten Komponente (109, 110) mit den Testsignalen (112, 113) keine Abweichung erfasst wird.

7. Verfahren nach einem der vorhergehenden Ansprüche, **dadurch gekennzeichnet, dass** während der Ansteuerung der Komponenten (109, 110) mit den jeweiligen Testsignalen (112, 113) ein Übertragungselement (102, 104) des Fahrzeugsantriebsstrangs (100), welches zwischen einem der Aggregate (101, 103), die dem Antrieb des Fahrzeugs dienen, und mindestens einem angetriebenen Fahrzeuggrad (106) angeordnet ist, schlupfend betrieben wird.

8. Verfahren nach einem der vorhergehenden Ansprüche, **dadurch gekennzeichnet, dass** die Testsignale (112, 113) so vorgegeben werden, dass die Wirkungen der damit jeweils angesteuerten Komponenten (109, 110) mittelwertfrei sind.

9. Verfahren nach einem der vorhergehenden Ansprüche, **dadurch gekennzeichnet, dass** die Testsignale (112, 113) in Abhängigkeit des aktuellen Zustands des Fahrzeugantriebsstrangs (100) bestimmt werden.

10. Verfahren nach einem der vorhergehenden Ansprüche, **dadurch gekennzeichnet, dass** während des Verfahrens eine Störung der ersten und der zweiten Komponente (109, 110) sowie der Antriebswelle (111) des Fahrzeugsantriebstrangs (100) vermieden wird.

11. Verfahren nach Anspruch 8, **dadurch gekennzeichnet, dass** die Störung das Schalten eines Getriebes (105) umfasst.

12. Verfahren nach einem der vorhergehenden Ansprüche, **dadurch gekennzeichnet, dass** die erste oder die zweite Komponente ein Aggregat (101 - 105) oder ein Teil eines Aggregats aus der Gruppe der Aggregate eines Fahrzeugantriebsstrangs (100) ist, insbesondere eine elektrische Maschine (103) und/oder einen Verbrennungsmotor (101) und/oder einen Hydraulikmotor und/oder ein Übertragungselement (102, 104, 105).

13. Verfahren nach einem der vorhergehenden Ansprüche, **dadurch gekennzeichnet, dass** die erste oder die zweite Komponente (109, 110) ein Zylinder (109) eines Verbrennungsmotors (101) ist und/oder dass die Komponente mindestens eine Wicklung (110) einer elektrischen Maschine (103) ist.

14. Vorrichtung zur Überwachung der bestimmungsgemäßen Funktion mindestens einer ersten und einer zweiten Komponente (109, 110) eines Fahrzeugantriebsstrangs (100), wobei Mittel (114) vorgesehen sind, die die erste Komponente (109) mit einem ersten Testsignal (112) und die zweite Komponente (110) mit einem zweiten Testsignal (113) ansteuern wobei die erste Komponente (109) in Abhängigkeit eines ersten Testsignals (112) eine erste Wirkung auf das an einer Antriebswelle (111) anliegende Drehmoment hat und die zweite Komponente (110) in Abhängigkeit eines zweiten Testsignals (113) eine zweite Wirkung auf das an der Antriebswelle (111) anliegende Drehmoment hat **dadurch gekennzeichnet, dass** das Mittel (114) das erste und das zweite Testsignal (112, 113) so vorgibt, dass sich bei bestimmungsgemäßer Funktion die Wirkungen der ersten und der zweiten Komponente (109, 110) auf das an der Antriebswelle (111) anliegende Drehmoment gegenseitig aufheben.

**Claims**

1. Method for monitoring the satisfactory functioning of at least a first and a second component (109, 110) of a vehicle drive train (100), wherein the first component (109) is actuated with a first test signal (112) and the second component (110) is actuated with a second test signal (113), wherein the first component (109) has a first effect on the torque applied to a driveshaft (111), as a function of a first test signal (112), and the second component (110) has a second effect on the torque applied to the driveshaft (111), as a function of a second test signal (113), **characterized in that** the first and second test signals (112, 113) are predefined in such a way that in the case of satisfactory functioning the effects of the first and second components (109, 110) on the torque applied to the driveshaft (111) cancel one another out.

2. Method according to one of the preceding claims, **characterized in that** a mathematical model (117) which describes at least part of the vehicle drive train (100) is used to calculate the respective effects of the components (109, 110), and **in that** deviations between the calculated effects and the effects detected by means of sensors (118) are detected.

3. Method according to Claim 2, **characterized in that** the mathematical model (117) which describes at least part of the vehicle drive train (100) is used to calculate the respective effects of the components (109, 110) without the actuation with the respective test signals (112, 113), and **in that** deviations between the calculated effects and the effects detected by means of sensors (118) are detected.

4. Method according to one of the preceding claims, **characterized in that** in the case of unsatisfactory functioning, when the effects of the first and second components (109, 110) on the torque applied to the driveshaft do not cancel one another out, the actuation of at least one component (109, 110) for the further operation of the at least one component (109, 110) is changed.

5. Method according to Claim 2 or 3, **characterized in that** the actuation of at least one component (109, 110) for the further operation of the at least one component (109, 110) is changed as a function of the detected deviation.

6. Method according to Claim 4 or 5, **characterized in that** the actuation for the further operation of the component (109, 110) is changed in such a way that no deviation is detected during subsequent actuation of the first and second components (109, 110) with the test signals (112, 113).

7. Method according to one of the preceding claims, **characterized in that** during the actuation of the components (109, 110) with the respective test signals (112, 113) a transmitting element (102, 104) of the vehicle drive train (100), which is arranged between one of the assemblies (101, 103), which serve to drive the vehicle, and at least one driven vehicle wheel (106), is operated in a slipping fashion.

8. Method according to one of the preceding claims, **characterized in that** the test signals (112, 113) are predefined in such a way that the effects of the components (109, 110) which are respectively actuated therewith are free of mean values.

9. Method according to one of the preceding claims, **characterized in that** the test signals (112, 113) are determined as a function of the current state of the vehicle drive train (100).

10. Method according to one of the preceding claims,

**characterized in that** during the method disruption of the first and second components (109, 110) and of the driveshaft (111) of the vehicle drive train (100) is avoided.

11. Method according to Claim 8, **characterized in that** the disruption comprises shifting a transmission (105).

12. Method according to one of the preceding claims, **characterized in that** the first or the second component is an assembly (101-105) or part of an assembly from the group of the assemblies of a vehicle drive train (100), in particular an electric machine (103) and/or an internal combustion engine (101) and/or a hydraulic engine and/or a transmitting element (102, 104, 105).

13. Method according to one of the preceding claims, **characterized in that** the first or the second component (109, 110) is a cylinder (109) of an internal combustion engine (101), and/or **in that** the component is at least one winding (110) of an electric machine (103).

14. Device for monitoring the satisfactory functioning of at least a first and a second component (109, 110) of a vehicle drive train (100), wherein means (114) are provided which actuate the first component (109) with a first test signal (112) and the second component (110) with a second test signal (113), wherein the first component (109) has a first effect on the torque applied to a driveshaft (111) as a function of a first test signal (112), and the second component (110) has a second effect on the torque applied to the driveshaft (111), as a function of a second test signal (113), **characterized in that** the means (114) predefines the first and second test signals (112, 113) in such a way that in the case of satisfactory functioning the effects of the first and second components (109, 110) on the torque applied to the driveshaft (111) cancel one another out.

**Revendications**

1. Procédé de surveillance du fonctionnement conforme d'au moins un premier et un deuxième composant (109, 110) d'une chaîne cinématique de véhicule (100), le premier composant (109) étant excité par un premier signal de test (112) et le deuxième composant (110) par un deuxième signal de test (113),

le premier composant (109) ayant un premier effet sur le couple appliqué à un arbre d'entraînement (111) en fonction d'un premier signal de test (112) et le deuxième composant (110) ayant un deuxième effet sur le couple appliqué à l'arbre d'entraînement (111) en fonction d'un deuxième signal de test (113), **caractérisé en ce que** les premier et deuxième signaux de test (112, 113) sont prédéfinis de telle sorte que lors d'un fonctionnement conforme, les effets des premier et deuxième composants (109, 110) sur le couple appliqué à l'arbre d'entraînement (111) s'annulent mutuellement.

2. Procédé selon l'une des revendications précédentes, **caractérisé en ce qu'**un modèle mathématique (117) qui décrit au moins une partie de la chaîne cinématique de véhicule (100) est utilisé afin de calculer les effets respectifs des composants (109, 110), et **en ce que** des écarts entre les effets calculés et ceux détectés au moyen de capteurs (118) sont détectés.

3. Procédé selon la revendication 2, **caractérisé en ce que** le modèle mathématique (117), qui décrit au moins une partie de la chaîne cinématique de véhicule (100), est utilisé pour calculer les effets respectifs des composants (109, 110) sans l'excitation par les signaux de test (112, 113) respectifs et **en ce que** des écarts entre les effets calculés et ceux détectés au moyen de capteurs (118) sont détectés.

4. Procédé selon l'une des revendications précédentes, **caractérisé en ce que** dans le cas d'un fonctionnement non conforme, lorsque les effets des premier et deuxième composants (109, 110) sur le couple appliqué à l'arbre d'entraînement ne s'annulent pas mutuellement, l'excitation d'au moins un composant (109, 110) est modifiée pour la poursuite du fonctionnement de l'au moins un composant (109, 110).

5. Procédé selon la revendication 2 ou 3, **caractérisé en ce que** l'excitation d'au moins un composant (109, 110) est modifiée pour la poursuite du fonctionnement de l'au moins un composant (109, 110) en fonction de l'écart détecté.

6. Procédé selon la revendication 4 ou 5, **caractérisé en ce que** l'excitation pour la poursuite du fonctionnement du composant (109, 110) est modifiée de telle sorte qu'aucun écart n'est détecté lors d'une excitation suivante du premier et du deuxième composant (109, 110) par les signaux de test (112, 113).

7. Procédé selon l'une des revendications précédentes, **caractérisé en ce que** pendant l'excitation des composants (109, 110) avec les signaux de test (112, 113) respectifs, un élément de transmission (102, 104) de la chaîne cinématique de véhicule (100), lequel est disposé entre l'un des blocs (101, 103) qui servent à la propulsion du véhicule et au moins une roue de véhicule (106) motrice, fonctionne en patinant.

8. Procédé selon l'une des revendications précédentes, **caractérisé en ce que** les signaux de test (112, 113) sont prédéfinis de telle sorte que les effets des composants (109, 110) respectivement excités par ceux-ci sont exempts de valeur moyenne.

9. Procédé selon l'une des revendications précédentes, **caractérisé en ce que** les signaux de test (112, 113) sont définis en fonction de l'état actuel de la chaîne cinématique de véhicule (100).

10. Procédé selon l'une des revendications précédentes, **caractérisé en ce que** pendant le procédé, une perturbation des premier et deuxième composants (109, 110) ainsi que de l'arbre d'entraînement (111) de la chaîne cinématique de véhicule (100) est évitée.

11. Procédé selon la revendication 8, **caractérisé en ce que** la perturbation comprend le changement de rapport d'une boîte de vitesses (105).

12. Procédé selon l'une des revendications précédentes, **caractérisé en ce que** le premier ou le deuxième composant est un bloc (101 - 105) ou une partie d'un bloc du groupe des blocs d'une chaîne cinématique de véhicule (100), notamment une machine électrique (103) et/ou un moteur à combustion interne (101) et/ou un moteur hydraulique et/ou un élément de transmission (102, 104, 105).

13. Procédé selon l'une des revendications précédentes, **caractérisé en ce que** le premier ou le deuxième composant (109, 110) est un cylindre (109) d'un moteur à combustion interne (101) et/ou **en ce que** le composant est au moins un enroulement (110) d'une machine électrique (103).

14. Dispositif de surveillance du fonctionnement conforme d'au moins un premier et un deuxième composant (109, 110) d'une chaîne cinématique de véhicule (100), des moyens (114) étant présents, lesquels excitent le premier composant (109) par un premier signal de test (112) et le deuxième composant (110) par un deuxième signal de test (113), le premier composant (109) ayant un premier effet sur le couple appliqué à un arbre d'entraînement (111) en fonction d'un premier signal de test (112) et le deuxième composant (110) ayant un deuxième effet sur le couple appliqué à l'arbre d'entraînement (111) en fonction d'un deuxième signal de test (113), **caractérisé en ce que** les moyens (114) prédéfinissent les premier et deuxième signaux de test (112, 113) de telle sorte **que** lors d'un fonctionnement conforme, les effets des premier et deuxième composants (109, 110) sur le couple appliqué à l'arbre d'entraînement (111) s'annulent mutuellement.

# FIG. 1

100

109

113

110    111    104

106

107    108

112    101    102    103    115    118    105    116

117    114

# FIG. 2

201

202

203

204

205

206    207

208

# FIG. 3

EP 2 670 644 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008041108
- DE 102008064536 A1
- DE 102008000869 A1